# EUROPEAN PATENT SPECIFICATION

(11) **EP 2 030 812 B1**
(45) Date of publication and mention of the grant of the patent: **28.04.2010**
(21) Application number: 08075668.7
(22) Date of filing: 28.07.2008
(51) Int. Cl.: B60C 27/14

(54) **A hooking device for anti-skid chains**
Befestigungsvorrichtung für Gleitschutzketten
Dispositif de fixation pour chaînes anti-dérapage

(30) Priority: 27.08.2007 IT MO20070271
(43) Date of publication of application: 04.03.2009
(73) Proprietor: Weissenfels Traction S.p.A., Santa Lucia di Piave (TV) (IT)
(72) Inventor: Gobessi, Mario, 33100 Udine (IT); Piasenzotto, Marco, 33100 Udine (IT)
(74) Representative: Gotra, Stefano

(56) References cited:
- EP-A- 0 496 702
- EP-A- 0 528 506
- WO-A-03/011618

## Description

The present invention relates to a hooking device for anti-skid chains.

The prior art comprises anti-skid chains for wheeled vehicles which comprise a support body provided with radial arms which support the branches of the chain. The support body can be positioned frontally on the wheel externally of the wheel itself. The radial arms the support body is provided with are conformed such as to arrange the chain branches on the tyre tread.

The support body of the chain must be anchored to the wheel in order to prevent translation movements directed along the rotation axis of the wheel in a distancing direction from the wheel itself. If these movements are not decisively prevented, the chain might separate from the wheel either partially or totally, becoming substantially useless.

The anchoring of the support body is typically done using a hooking device which comprises a locking component, predisposed to stably fasten on the head of one of the fastening screws of the wheel to the hub, to which a flexible element is associated, for example a steel cable, which at the other end is fastened to the support body of the chain. Traction means of various types are predisposed to transmit a traction force to the flexible element the effect of which is to pull the support body towards the wheel.

The hooking devices of known type are in general rather complex and not easy to use. In some cases the operations for fastening the hooking device to the wheel are complicated and laborious and require relatively long times. Furthermore the flexible element is subjected to stresses and deformations that are different those due to the simple traction action which would be necessary for fastening the chain to the wheel, to the point that it is often difficult to obtain a correct centring of the chain with respect to the wheel. Examples of known devices showing the above cited drawbacks are given in the following documents.
According to the preamble of claim 1, document WO 03/011618 discloses a nonskid device for the wheels of vehicles, comprising a holding element situated in the region of the wheel axis and used with elastic holding arms holding a chain mesh. A tension cable is used to introduce tension forces into the holding arms. In order to introduce a defined tensile stress into the tension cable, said tension cable is connected to a pivotable tension lever.

Document EP 528 506 discloses an attachment device with a connection part which has a connector pin which is provided with a transverse bore for a ball with the aid of which it can be locked into a bore of a wheel screw or wheel nut is used for rapidly attaching the holding device of an antiskid device to the wheel screw or wheel nut of a wheel of a vehicle. In order to be able to remove the ball from its locked position, the connector pin is constructed as a guide bushing for a locking bolt with an annular groove into which the ball can temporarily move when the locking bolt is displaced counter to the effect of a restoring spring.

The aim of the present invention is to provide a hooking device for anti-skid chains which enables the drawbacks in the known-type devices to be obviated.

Characteristics and advantages of the invention will better emerge from the detailed description made herein below with reference to the accompanying figures of the drawings, given byway of non-limiting example, in which:

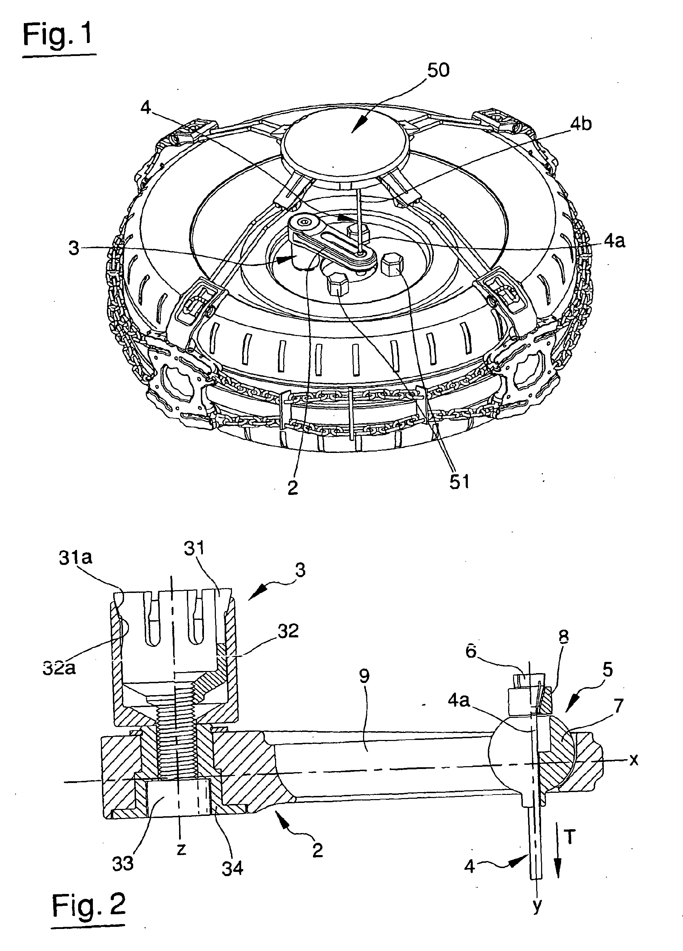

figure 1 is a perspective view of a hooking device according to the present invention associated to an anti-skid chain and a wheel;
figure 2 is a half-view in semi-section of the hooking device of the present invention.

The hook device for anti-skid chains of the present invention comprises a shaped arm 2 provided with a longitudinal axis x. A locking component 3 is rotatably associated to the shaped arm 2 about a longitudinal axis Z, preferably positioned at an end of the arm. The locking component 3 is predisposed to be solidly constrained to a fastening screw of a wheel.

A flexible element 4, having a longitudinal axis y, is associated at a first end 4a thereof to the shaped arm 2. The flexible element 4 is associable at a second end 4b thereof to an anti-skid chain 50 towards which it can be drawn by a traction force T. The flexible element 4 can be constituted for example by a metal or synthetic fibre cable. The traction force T can be exerted for example by means of an automatic recall mechanism solidly constrained to the anti-skid chain, in which the flexible element 4 is associated to a pre-loaded winding drum in the winding rotation direction of the flexible element.

The device further comprises connecting means 5 which connect the first end 4a of the flexible element 4 to the shaped arm. The connecting means 5 are conformed such as to define a spherical articulation, slidable in a transversal direction to the first end 4a, between the first end 4a of the flexible element 4 and the shaped arm 2.

In a preferred embodiment of the device, the connecting means 5 comprise a terminal element 6 which is solidly associable to the first end 4a of the flexible element 4. A spherical element 7, arranged coaxially to the first end 4a of the flexible element 4, is provided with a shaped housing 8 predisposed to house the terminal element 6 internally thereof and prevent displacements of the terminal elements 6 in the direction of the traction force T. The shaped seating 8 is preferably constrained to the spherical element 7 and is realised in a stiffer and harder material with respect to the terminal element 6 and the spherical element 7. In a preferred embodiment, the terminal element 6 and the spherical element 7 are made of plastic, while the shaped seating 8 is made of metal. In this way every possible wedge effect on the part of the terminal element 6 with respect to the shaped seating 8 and the spherical element 7 is prevented.

In the preferred embodiment of the device the shaped arm 2 is provided with a through-slot 9 which extends transversally to the traction force T and is shaped such as to receive the spherical element 7 with freedom to rotate in the space and with freedom to slide in a transversal direction to the traction force T. The through-slot 9 is further shaped such as to prevent displacements of the spherical element 7 in the direction of the traction force T, enabling passage of the flexible element 4.

As can easily be intuited, the spherical articulation defined thanks to the connecting means 5 enables an almost total freedom of positioning of the first end 4a of the flexible element 4. In particular, independently of the relative position of the first end 4a with respect to the fastening screw to which the locking component 3 is constrained, the flexible element 4 can be arranged along the direction of the traction force T without being subjected to substantial deformation or torsion. The first element 4a can rotate about the axis thereof and can rotate in the space about the centre of instantaneous rotation of the spherical element 7. The freedom to rotate of the shaped arm 2 about the longitudinal axis Z of the locking component 3, which is substantially parallel to the rotation axis of the wheel, and the possibility for the first end 4a to slide along the through-slot 9 allow the flexible element 4 a further possibility of adapting to the position of the fastening screw of the wheel. By having the shaped arm 2 of a sufficient size and longitudinal extension, the flexible element 4 can be arranged in a parallel position to the rotation axis of the wheel on action of the traction force T. The second end 4b of the flexible element 4 is preferably connected non-slidably to the anti-skid chain in a transversal direction to the rotation axis of the wheel, while the first end 4a can slide along the through-slot 9 in a transversal direction to the rotation axis of the wheel and can thus be aligned to the second end 4b parallel to the rotation axis of the wheel.

The locking component 3 comprises an internal bushing 31 and an external bushing 32 which are concentric to one another with respect to the longitudinal axis Z. The internal bushing 31 is provided with an opening through which it can house internally thereof the head of a fastening screw 51 of the wheel. The internal bushing 31 is deformable between a loose configuration, in which it houses the head of the screw with play, and a locked configuration, in which it locks the head of the screw internally of itself, preventing relative sliding in a parallel direction to the longitudinal axis Z.

The internal bushing 31 and the external bushing 32 are in reciprocal contact at least at conical lateral surfaces 31a, 32a, which diverge towards the opening of the internal bushing 31, which, sliding on one another, determine a deformation of the internal bushing 31 between the loose configuration and the locked configuration. A screw 33, coaxial to the longitudinal axis z, is predisposed to screw into the internal bushing 31. The head of the screw 33 abuts at an abutment surface which is perpendicular to the axis of the screw, which defines the opening of a through-seating 34 through the external bushing 32. The through-seating 34 is constituted by a cylindrical sleeve which is coaxial to the longitudinal axis Z with respect to which the shaped arm 2 is free to rotate about the longitudinal axis Z. By rotating the wheel 33 an axial sliding can be set up between the internal bushing and the external bushing. By screwing the screw 33 with respect to the internal bushing 31 a sliding of the internal bushing is cause towards the inside of the external bushing. This sliding, by effect of the contact between the conical surfaces 31a, 32a, causes a contraction of the internal bushing 31 which deforms towards the locked configuration.

The use of the locking component 3 is thus quite simple and rapid It is sufficient to insert the internal bushing 31, in the loose configuration, on the head of a fastening screw of the wheel, and screw up the screw 33 causing a deformation of the internal bushing 31 which solidly locks the head of the screw internally. The connecting means 5 offer great freedom of movement of the shaped arm 2 so that the user is not constrained to identify a particular bolt to fasten the locking component to, nor is he forced to position the shaped arm 2 in a radial orientation with respect to the centre of the wheel.

Following the positioning and blocking of the component 3, the anti-skid chain can be positioned on the wheel. If the chain uses an automatic recall mechanism of the flexible element 4, the mounting of the chain is substantially completed, as thanks to the relative freedom of movement between the shaped arm 2 and the flexible arm 4 guaranteed by the connecting means 5, the flexible element 4, subject to the traction force T, and the shaped arm 2 adapt to the position of the fastening screw of the wheel without any need for further operations on the part of the user.

## Claims

1. A hooking device for anti-skid chains, comprising:
a shaped arm (2) provided with a longitudinal axis (x);
a locking component (3) rotatably associated to the shaped arm (2) about a longitudinal axis (Z), which is predisposed to be solidly constrained to a fastening screw of a wheel;
a flexible element (4), provided with a longitudinal axis (y), which at a first
end (4a) thereof is associated to the shaped arm (2), while at a second end (4b) thereof is associable to an anti-skid chain towards which the second
end (4b) can be drawn by a traction force (T);
connecting means (5) which connect the first end (4a) of the flexible element (4) to the shaped arm;
**characterised in that** the connecting means (5) are conformed such as to define a spherical articulation, between the first end (4a) of the flexible element (4) and the shaped arm (2), said spherical articulation being slidable in a transversal direction to the longitudinal axis (y) of the flexible element (4) at the first end (4a) thereof.

2. The device of claim 1, wherein the connecting means (5) comprise:
a terminal element (6) solidly associable to the first end (4a) of the flexible element (4);
a spherical element (7), coaxially arranged at the first end (4a) of the flexible element (4), which is provided with a shaped seating (8) predisposed to house the terminal element (6) internally thereof and to prevent displacements of the terminal end (6) in the direction of the traction force (T).

3. The device of claim 2, wherein the shaped arm (2) is provided with a through slot (9) which extends transversally of the traction force (T) and is shaped such as to receive the spherical element (7) with freedom to rotation in the space and freedom to slide in a transversal direction to the traction force (T), the through-slot (9) being shaped such as to prevent displacements of the spherical element (7) in the direction of the traction force (T), enabling passage of the flexible element (4).

4. The device of at least one of the preceding claims, wherein the locking component (3) comprises an internal bushing (31) and an external bushing (32) which are concentric to one another with respect to a longitudinal axis (Z), the internal bushing (31) being provided with an opening through which the internal bushing (31) can house internally thereof a head of a fastening screw of the wheel, the internal bushing (31) being deformable between a loose configuration, in which it houses the head of the screw with play, and a locked configuration, in which it locks the head of the screw internally thereof, preventing relative sliding in a parallel direction to the longitudinal axis (Z).

5. The device of the preceding claim, wherein the internal bushing (31) and the external bushing (32) are in reciprocal contact at least at conical lateral surfaces (31a, 32a) thereof, diverging towards the opening of the internal bushing (31), which surfaces (31a, 32a) slide with respect to one another and cause deformation of the internal bushing (31) between the loose configuration and the locked configuration.

6. The device of the preceding claim, wherein the locking component (3) comprises a screw (33), coaxial to the longitudinal axis (Z) thereof, which is predisposed to screw into the internal bushing (31), passing through the external bushing (32).

## Patentansprüche

1. Befestigungsvorrichtung für Gleitschutzketten, enthaltend:
- einen geformten Arm (2), versehen mit einer Längsachse (X);
- ein Feststellelement (3), um eine Längsachse (Z) drehbar dem geformten Arm (2) zugeordnet und dazu vorgesehen, sicher an einer Befestigungsschraube eines Rades gehalten zu werden;
- ein mit einer Längsachse (Y) versehenes flexibles Element (4), welches mit seinem ersten Ende (4a) dem geformten Arm (2) zugeordnet ist, während es mit seinem zweiten Ende (4b) mit einer Gleitschutzkette verbindbar ist, zu welcher das zweite Ende (4b) hin durch eine Zugkraft (T) gezogen werden kann;
- Verbindungsmittel (5), welche das erste Ende (4a) des flexiblen Elementes (4) an den geformten Arm anschliessen;
**dadurch gekennzeichnet, dass** die Verbindungsmittel (5) so ausgelegt sind, dass sie zwischen dem ersten Ende (4a) des flexiblen Elementes (4) und dem geformten Arm (2) ein Kugelgelenk bilden, wobei das genannte Kugelgelenk in einer quer zu der Längsachse (Y) des flexiblen Elementes (4) an dem ersten Ende (4a) desselben gleitbar ist.

2. Vorrichtung nach Patentanspruch 1, bei welcher die Verbindungsmittel (5) enthalten:
- ein Endelement (6), fest verbindbar mit dem ersten Ende (4a) des flexiblen Elementes (4);
- ein Kugelelement (7), koaxial an dem ersten Ende (4a) des flexiblen Elementes (4) angeordnet, welches mit einem geformten Sitz (8) versehen und dazu vorgesehen ist, das Endelement (6) in seinem Inneren aufzunehmen und Verschiebungen des Endelementes (6) in der Richtung der Zugkraft (T) zu verhindern.

3. Vorrichtung nach Patentanspruch 2, bei welcher der geformte Arm (2) mit einem durchgehenden Schlitz (9) versehen ist, welcher sich quer zu der Zugkraft (T) erstreckt und auf solche Weise geformt ist, dass er das Kugelelement (7) aufnimmt, und zwar mit der Freiheit, sich im Raum zu drehen, und der Freiheit, in einer Richtung quer zu der Zugkraft (T) zu gleiten, wobei der durchgehende Schlitz (9) auf solche Weise geformt ist, dass Verschiebungen des Kugelelementes (7) in der Richtung der Zugkraft (T) verhindert werden und das Durchführen des flexiblen Elementes (4) erlaubt ist.

4. Vorrichtung nach wenigstens einem der vorstehenden Patentansprüche, bei welcher das Feststellelement (3) eine interne Buchse (31) und eine äussere Buchse (32) enthält, welche im Verhältnis zu einer Längsachse (Z) konzentrisch zueinander sind, wobei die interne Buchse (31) mit einer Öffnung versehen ist, durch welche die interne Buchse (31) in ihrem Inneren den Kopf einer Befestigungsschraube des Rades aufnehmen kann, wobei die interne Buchse (31) verformbar ist zwischen einer lockeren Konfiguration, in welcher sie den Kopf der Schraube mit einem Spiel aufnimmt, und einer blockierten Konfiguration, in welcher sie den Kopf der Schraube in ihrem Inneren blockiert und das relative Gleiten in einer Richtung parallel zu der Längsachse (Z) verhindert.

5. Vorrichtung nach dem vorstehenden Patentanspruch, bei welcher die interne Buchse (31) und die äussere Buchse (32) wenigstens an ihren konischen seitlichen Oberflächen (31a, 32a) in gegenseitigem Kontakt miteinander stehen, divergierend in Richtung der Öffnung der internen Buchse (31), welche Oberflächen (31 a, 32a) im Verhältnis zueinander gleiten und die Verformung der internen Buchse (31) zwischen der lockeren Konfiguration und der blockierten Konfiguration bewirken.

6. Vorrichtung nach dem vorstehenden Patentanspruch, bei welcher das Feststellelement (3) eine Schraube (33) koaxial zu seiner Längsachse (Z) enthält, welche dazu vorgesehen ist, in die interne Buchse (31) geschraubt zu werden, wobei sie durch die äussere Buchse (32) geht.

## Revendications

1. Dispositif de fixation pour chaînes anti-dérapage, comprenant:
- un bras profilé (2) pourvu d'un axe longitudinal (x);
- un composant de blocage (3) associé en rotation au bras profilé (2) autour d'un axe longitudinal (Z), qui est prédisposé pour être associé solidement à une vis de fixation d'une roue;
- un élément flexible (4), pourvu d'un axe longitudinal (y), qui, en correspondance d'une première extrémité (4a), est associé au bras profilé (2), alors qu'en correspondance d'une seconde extrémité (4b), il est associable à une chaîne anti-dérapage vers laquelle la seconde extrémité (4b) peut être tirée par une force de traction (T);
- des moyens de connexion (5) qui connectent la première extrémité (4a) de l'élément flexible (4) au bras profilé;
**caractérisé en ce que** les moyens de connexion (5) sont conformés de manière à définir une articulation sphérique, entre la première extrémité (4a) de l'élément flexible (4) et le bras profilé (2), ladite articulation sphérique étant coulissante dans une direction transversale à l'axe longitudinal (y) de l'élément flexible (4) en correspondance de son extrémité (4a).

2. Dispositif selon la revendication 1, dans lequel les moyens de connexion (5) comprennent:
- un élément terminal (6) solidement associable à la première extrémité (4a) de l'élément flexible (4);
- un élément sphérique (7), coaxialement disposé en correspondance de la première extrémité (4a) de l'élément flexible (4), qui est pourvu d'un logement conformé (8) prédisposé pour loger l'élément terminal (6) en son intérieur et pour prévenir les déplacements de l'extrémité terminale (6) dans la direction de la force de traction (T).

3. Dispositif selon la revendication 2, dans lequel le bras profilé (2) est pourvu d'un orifice passant (9) qui s'étend transversalement à la force de traction (T) et est conformé de manière à recevoir l'élément sphérique (7) avec une liberté de rotation dans l'espace et une liberté de translation dans une direction transversale à la force de traction (T), l'orifice passant (9) étant conformé de manière à prévenir les déplacements de l'élément sphérique (7) dans la direction de la force de traction (T), en permettant le passage de l'élément flexible (4).

4. Dispositif selon au moins l'une des revendications précédentes, dans lequel le composant de blocage (3) comprend une bague interne (31) et une bague externe (32) qui sont concentriques l'une de l'autre par rapport à un axe longitudinal (Z), la bague interne (31) étant pourvue d'une ouverture au travers de laquelle la bague interne (31) peut loger en son intérieur la tête d'une vis de fixation de la roue, la bague interne (31) étant déformable entre une configuration lâche, dans laquelle elle loge la tête de la vis avec du jeu, et une configuration serrée, dans laquelle elle bloque la tête de la vis en son intérieur, en empêchant la relative translation dans une direction parallèle à l'axe longitudinal (Z).

5. Dispositif selon la revendication précédente, dans lequel la bague interne (31) et la bague externe (32) sont en contact réciproque au moins en correspondance de leurs surfaces latérales coniques (31a, 32a), divergentes vers l'ouverture de la bague interne (31), lesquelles surfaces (31a, 32a) coulissent l'une par rapport à l'autre et causent la déformation de la bague interne (31) entre la configuration lâche et la configuration serrée.

6. Dispositif selon la revendication précédente, dans lequel le composant de blocage (3) comprend une vis (33), coaxiale de son axe longitudinal (Z), qui est prédisposée pour se visser dans la bague interne (31), en passant au travers de la bague externe (32).
